# EUROPÄISCHE PATENTSCHRIFT

(11) **EP 1 957 592 B1**
(45) Veröffentlichungstag und Bekanntmachung des Hinweises auf die Patenterteilung: **07.03.2012**
(21) Anmeldenummer: 06819488.5
(22) Anmeldetag: 15.11.2006
(51) Int. Cl.: C09D 133/00

(54) **WÄSSRIGE BESCHICHTUNGSZUSAMMENSETZUNG MIT NIEDRIGEM VOC-GEHALT**
AQUEOUS COATING COMPOSITION WITH LOW VOC CONTENT
COMPOSITION AQUEUSE DE REVETEMENT A FAIBLE TENEUR EN COV

(30) Priorität: 25.11.2005 DE 102005056591
(43) Veröffentlichungstag der Anmeldung: 20.08.2008
(73) Patentinhaber: BASF SE, 67056 Ludwigshafen (DE)
(72) Erfinder: ROSCHMANN, Konrad, 67069 Ludwigshafen-Edigheim (DE); LEUNINGER, Jörg, 55129 Mainz (DE); DERSCH, Rolf, 67434 Neustadt (DE)
(86) Internationale Anmeldenummer: PCT/EP2006/068476
(87) Internationale Veröffentlichungsnummer: WO 2007/060118

(56) Entgegenhaltungen:
- EP-A2- 1 118 632
- WO-A-97/49739
- WO-A-2005/054384

## Beschreibung

Die vorliegende Erfindung betrifft die Verwendung von hydroxy-funktionalen Copolymeren in wässrigen Beschichtungszusammensetzungen, wie Farb- und Papierbeschichtungszusammensetzungen zur Verringerung des VOC-Gehaltes unter Bewahrung der Gefrier/Tau-Stabilität dieser Zusammensetzungen.

Farbbeschichtungszusammensetzungen wie Latexanstrichmittel werden für verschiedene Anwendungen einschließlich Innen- und Außenanwendungen und Matt-, Halbglanz- und Glanzanwendungen eingesetzt. Zur Bereitstellung von Latexanstrichmitteln mit guter Filmbildung werden diese Anstrichmittel bzw. Farben häufig mit Koaleszenzmitteln versetzt. Beispiele für Koaleszenzmittel sind 2,2,4-Trimethyl-1,3-pentandiol-monoisobutyrat (d.h. HEXANOL^{®}, das im Handel von Eastman Chemical erhältlich ist) und 2-Ethylhexylbenzoat (d.h. VELATE^{®} 378, das im Handel von Vesicol Corporation erhältlich ist).

Neben Koaleszenzmitteln enthalten Latexanstrichmittel Frostschutzmittel, damit die Anstrichmittel auch nach Frosteinwirkung noch verwendet werden können. Die Frostschutzmittel erhöhen in der Regel auch die offene Zeit für Latexanstrichmittel. Beispiele für Frostschutzmittel sind Ethylenglykol, Diethylenglykol und Propylenglykol. Eine ausführliche Besprechung dieser Frostschutzmittel findet sich in "Antifreezes", Ulmann's Encyclopedia of Industrial Chemistry, 5. Auflage, Band A3, Seiten 23-31.

Die als Koaleszenzmittel und Frostschutzmittel verwendeten Additive erfüllen ihren Zweck, werden aber immer unerwünschter, da es sich bei ihnen um flüchtige organische Verbindungen (VOC's) handelt. Nach dem Auftragen des Latexanstrichmittels auf ein Substrat verdampfen die VOC's langsam in die Umgebung. Da zulässige VOC-Gehalte infolge zunehmender Umweltvorschriften immer weiter sinken, hat sich in der Technik Bedarf an der Herstellung von Latexanstrichmitteln mit niedrigeren VOC-Gehalten ergeben. Außerdem besteht Bedarf an der Bewahrung der Leistungsfähigkeit von Latexanstrichmitteln auch bei diesen niedrigeren VOC-Gehalten.

EP 1 106 660 beschreibt eine Harzzusammensetzung für ein wässriges Anstrichmittel, die Emulsionsteilchen mit unterschiedlicher Phasenstruktur enthält, wobei die Emulsionsteilchen mit unterschiedlicher Phasenstruktur eine äußere Phase mit 1 bis 20 Gew.-% eines ethylenisch ungesättigten Monomeres mit mindestens einer Polyethylenglykol-Kette und/oder einer Polypropylen-Kette aufweisen.

Obgleich die Verwendung hydroxy-funktionaler CoMonomere in Dispersionen nicht unbekannt ist, wurde ihre Verwendung zur Steigerung der Gefrier/Tau-Stabilität bis jetzt noch nicht beschrieben. Hydroxy-funktionale Co-Monomere werden bevorzugt als dispergierend wirkende oder reaktive Polymerkomponenten eingesetzt.

So beschreibt US 4,102,843 die Synthese und Verwendung von Dispergierharzen, welche 25-90% hydroxy-funktionale Monomere enthalten; namentlich werden Hydroxyethyl-, Hydroxypropyl-, sowie Glycerin-Methacrylat erwähnt.

JP 2002-234904 beschreibt gefrier/tau-stabile Holzkleber, welche bis zu 10% eines verseiften Polyvinylalkohols als Schutzkolloid sowie Hydroxyethyl(meth)acrylat sowie Hydroxypropylacrylat als dispergierend wirkende Komponente enthalten.

In DE 19903979 wird die Funktionalisierung von Stärke als Polyhydroxy-Verbindung mit Hydroxyethyl(meth)acrylat sowie die anschließende Verwendung dieser Makromonomeren beschrieben.

Als Beispiele für die Inkorporation hydroxy-funktionaler Co-Monomere als Reäktiv-Gruppe seien US 4,539,363 (2-Stufen-Polymere mit bis zu 30% Hydroxy-Monomer in der Außenschale als Vernetzer-Komponente) sowie JP 11-124508 (Latex, enthaltend vic-Diol-Gruppen als bei Raumtemperatur reaktive Seitengruppen) erwähnt. Hierbei wird die Reaktivität der Alkohol-Funktion etwa gegenüber Epoxiden, Carbonsäuren oder Isocyanaten ausgenutzt.

In der DE 2340975, werden Derivate von Glycerin(meth)acrylat oder Glycerinallylether als stabilisierend wirkende Co-Monomere beschrieben; deren Wirkung beruht allerdings auf der in der Seitenkette beinhalteten Polyethylenoxid-Kette.

In ähnlicher Weise ist in JP 2004-059622 zwar die Verwendung von Hydroxyethylacrylat als normales Co-Monomer in einem Kern/Schale-Polymeren, welches als Bindemittel mit niedrigem VOC-Gehalt Verwendung findet, erwähnt, für die nötige Gefrier/Tau-Stabilität sorgt aber die Inkorporation eines hydrophilen Monomers, beinhaltend Sulfonsäure- oder Amidgruppen bzw. Polyethylenoxid- oder Polypropylenoxid-Ketten, in die harte Außenschale.

US 3,309,331 beschreibt die Umsetzung eines Carboxylatgruppen-haltigen Latex mit Aziridinen. Dies führt zur Funktionalisierung der Polymerkette mit 2-Aminoethylestern bzw. 2-Hydroxyethylamiden; zur Implementierung der Eigenschaft "Gefrier/Tau-Stabilität" werden 0,3%-10% nicht-ionischer Emulgator eingesetzt.

Aufgabe der vorliegenden Erfindung war die Bereitstellung einer wässrigen Beschichtungsmasse, insbesondere für Latexanstrichmittel, die Beschichtungen mit niedrigem VOC-Gehalt, verbesserter Gefrier-Tau-Stabilität und verbesserter Hitze-Lagerstabilität ergibt.

Erfindungsgemäß gelöst wurde die Aufgabe durch wässrige Beschichtungsmassen enthaltend
(a) Bindemittel auf Acrylat-Basis, enthaltend 1 bis 10 Gew.-% mindestens eines hydroxy-funktionalen Comonomers der allgemeinen Formel (I)

   A-[B]ₙ-C

   wobei
   - A: eine polymerisierbare Gruppe bedeutet,
   - B: einen Spacer und
   - C: einen hydroxy-funktionalen Rest bedeutet und
   - n: die Zahl 0 oder 1 bedeutet
(b) mindestens ein Pigment
(c) Wasser
(d) 0 bis 3 Gew.-% Frostschutzmittel sowie
(e) gegebenenfalls weitere übliche Hilfsmittel, dadurch gekennzeichnet, dass die hydroxy-funktionalen Comonomere (a) ausgewählt sind aus der Gruppe Glycerin-monomethacrylat (Blemmer^{®} GLM) und Glycerin-monoacrylat.

Besonders bevorzugt sind Glycerin-monomethacrylat (Blemmer^{®} GLM) und Glycerin-monoacrylat. Die üblicherweise eingesetzte, erfindungsgemäße Menge an hydroxy-funktionellem Comonomer liegt zwischen 1% und 10% (bezogen auf das Gesamtgewicht des Polymeren), bevorzugt bei 2-5%.

Es wurde gefunden, dass durch die Verwendung hydroxy-funktionaler Comonomere für wässrige Beschichtungszusammensetzungen die benötigte Menge an Frostschutzmitteln deutlich reduziert werden kann. So können gefrier/tau-stabile Beschichtungszusammensetzungen (z.B. Dispersionsfarben), welche gemäß dieser Erfindung hydroxyfunktionale Comonomere beinhalten, unter Verwendung von wenig oder sogar ganz ohne Frostschutz-Additive hergestellt werden. Erfindungsgemäße wässrige Beschichtungszusammensetzungen beinhalten weniger als 3% (basierend auf dem Gesamtgewicht der wässrigen Zusammensetzung), bevorzugt weniger als 1 Gew.-% an Frostschutzmitteln. Besonders bevorzugt ist natürlich der Fall, dass die Beschichtungszusammensetzung nahezu frei von Frostschutzmitteln ist. Auf diese Weise enthalten Beschichtungszusammensetzungen, welche gemäß dieser Erfindung hergestellt wurden, geringere Mengen an flüchtigen organischen Verbindungen (VOC's) und sind damit umweltfreundlicher.

Ein weiterer Gegenstand der Erfindung ist daher die Verwendung der Comonomere der allgemeinen Formel (I) zur Verbesserung der Gefrier-Tau-Stabilität von wässrigen Beschichtungsmitteln, insbesondere von Latexanstrichmitteln.

Die erfindungsgemäße Hydroxy-Funktionalisierung der Polymerdispersion lässt sich durch unterschiedliche Methoden bewerkstelligen. So können entweder bereits hydroxyfunktionale Comonomere direkt einpolymerisiert werden oder geeignete Vorstufen erst nachträglich in hydroxyfunktionale Comonomere umgewandelt werden.

Das in der wässrigen Beschichtungszusammensetzung verwendete Latexpolymer (a) leitet sich vorzugsweise von Monomeren ab, die mindestens ein Acrylmonomer aus der Gruppe bestehend aus Acrylsäure, Acrylsäureestern, Methacrylsäure und Methacrylsäureestern umfassen. Außerdem kann das Latexpolymer gegebenenfalls ein oder mehrere Monomere aus der Gruppe bestehend aus Styrol, α-Methylstyrol, Vinylchlorid, Acrylnitril, Methacrylnitril, Acrylamid, Methacrylamid, Vinylacetat, Vinylestern von verzweigten tertiären Monocarbonsäuren (z.B. Vinylester, die im Handel unter dem Warenzeichen VEOVA^{®} von Shell Chemical Company erhältlich sind oder unter der Bezeichnung EXXAR^{®} Neo Vinyl Esters von ExxonMobil Chemical Company vertrieben werden), Discarbonsäuren wie Itaconsäure, Crotonsäure, Maleinsäure, Fumarsäure sowie deren Halbester und Ethylen. Möglich ist auch die Mitverwendung von konjugierten C₄-C₈-Dienen, wie 1,3-Butadien, Isopren und Chloropren. Vorzugsweise umfassen die Monomere ein oder mehrere Monomere aus der Gruppe bestehend aus n-Butylacrylat, Methylmethacrylat, Styrol und 2-Ethylhexylacrylat. Das Latexpolymer wird in der Regel aus der Gruppe bestehend aus reinen Acrylharzen (die als Hauptmonomere Acrylsäure, Methacrylsäure, einen Acrylsäureester und/oder einen Methacrylsäureester enthalten); Styrol-Acryl-Harzen (die als Hauptmonomere Styrol und Acrylsäure, Methacrylsäure, einen Acrylsäureester und/oder einen Methacrylsäureester enthalten); Vinyl-Acryl-Harze (die als Hauptmonomere Vinylacetat und Acrylsäure, Methacrylsäure, einen Acrylsäureester und/oder einen Methacrylsäureester enthalten); und acrylierten Ethylen-Vinylacetat-Copolymeren (die als Hauptmonomere Ethylen, Vinylacetat und Acrylsäure, Methacrylsäure, einen Acrylsäureester und/oder einen Methacrylsäureester enthalten) ausgewählt. Die Monomere können auch andere Hauptmonomere, wie Acrylamid und Acrylnitril, und ein oder mehrere funktionale Monomere, wie Acrylsäure, Methacrylsäure, Itaconsäure, Acetylacetoxyethylmethacrylat und Ureidomethacrylat, umfassen, wie für den Fachmann leicht ersichtlich ist. Nach einer besonders bevorzugten Ausführungsform handelt es sich bei dem Latexpolymer um ein reines Acrylharz, wie ein Butylacrylat/Methylmethacrylat-Copolymer oder ein Ethylhexylacrylat/Methylmethacrylat-Copolymer, das sich von Butylacrylat, Ethylhexylacrylat und Methylmethacrylat umfassenden Hauptmonomeren ableitet.

Das erfindungsgemäße, hydroxy-funktionales Comonomer enthaltende Latexpolymer (a) kann in der wässrigen Beschichtungszusammensetzung in Kombination mit Tensiden vom anionischen, nichtionischen, kationischen oder amphoteren Typ, , die entweder polymerisierbar oder nicht polymerisierbar sind, verwendet werden. Anionische Tenside sind beispielsweise Alkylbenzolsulfonsäuren, sulfonierte Fettsäuren, Sulfosuccinate, Fettalkoholsulfate, Alkylphenolsulfate und Fettalkoholethersulfate. Als nichtionische Tenside können beispielsweise Alkylphenolethoxylate, Primäralkoholethoxilate, Fettsäureethoxilate, Alkanolamidethoxilate, Fettaminethoxilate; EO/PO-Blockcopolymere und Alkylpolyglucoside verwendet werden. Als kationische bzw. amphotere Tenside werden beispielsweise verwendet: Quaternisierte Aminalkoxylate, Alkylbetaine, Alkylamidobetaine und Sulfobetaine verwendet. Insbesondere kann man das Polymerlatex-Bindemittel mittels Emulsionspolymerisation herstellen, indem man einem Reaktor in Gegenwart von mindestens einem Initiator und mindestens einem Emulgator gemäß unten angeführter Beschreibung Monomere, beinhaltend mindestens ein erfindungsgemäßes hydroxy-funktionales Comonomer, zuführt und die Monomere zu dem Latexbindemittel polymerisiert.

Bei dem Initiator kann es sich um einen beliebigen an sich zur Verwendung bei der Emulsionspolymerisation bekannten Initiator, wie Ammonium-, Natrium- oder Kaliumpersulfat, oder ein Redoxsystem, das in der Regel ein Oxidationsmittel und ein Reduktionsmittel enthält, handeln. Übliche Redoxinitiatorsysteme werden z.B. von A.S. Sarac in Progress in Polymer Science 24(1999), 1149-1204, beschrieben.

Geeignete Emulgatoren finden sich beispielsweise in Houben-Weyl, Methoden der organischen Chemie, Band XIV/1, Makromolekulare Stoffe, Georg Thieme Verlag, Stuttgart, 1961, Seite 192 bis 208.

Zur Herstellung des Polymerlatex-Bindemittels bereitet man zunächst eine den Initiator und Wasser enthaltende Initiatorlösung . Außerdem stellt man mindestens eine Monomeren-Voremulsion her, welche zumindest einen Teil der zur Bildung des Latexpolymers verwendeten Monomere, darunter das erfindungsgemäße hydroxyfunctionale Comonomer, ein oder mehrere Tenside, Wasser und zusätzliche Additive, wie NaOH, enthält. Dann gibt man die Initiatorlösung und die Monomeren-Voremulsion über einen vorgegebenen Zeitraum (z.B. 1,5 bis 5 Stunden) kontinuierlich in den Reaktor, um die Monomere zum Polymerisieren zu bringen und so das Latexpolymer herzustellen. Vorzugsweise gibt man mindestens einen Teil der Intiatorlösung in den Reaktor, bevor man die Monomeren-Voremulsion zugibt. Vor der Zugabe der Initiatorlösung und der Monomeren-Voremulsion kann man einen Saatlatex, wie einen Polystyrol-Saatlatex, in den Reaktor geben. Die Verwendung des Saatlatex dient zum Erhalt einer einheitlichen Teilchengrößenverteilung und beeinflusst die Gefrier/Tau-Stabilität des Anstrichmittels nicht. Außerdem kann man vor der Zugabe des Initiators und der Zugabe der Monomeren-Voremulsion Wasser, ein oder mehrere Tenside und nicht in der Monomeren-Voremulsion bereitgestellte Monomere in den Reaktor geben. Der Reaktor wird zur Herstellung des Polymerlatex-Bindemittels zumindest so lange bei erhöhter Temperatur betrieben, bis alle Monomere zugegeben sind.

Um die Forderung nach guter Verfilmung der Beschichtungszusammensetzung ohne Zugabe von Filmbildehilfsmitteln in Kombination mit guter Blockfestigkeit erfüllen zu können wird in einer bevorzugten Ausführungsform das erfindungsgemäße hydroxyfunktionalisierte Latexpolymer in einem Zwei-Stufen-Prozess, wie in EP 710680 beschrieben mittels Verwendung zweier voneinander unterschiedlicher Monomer-Voremulsionen hergestellt, was in der Ausbildung von zwei Polymerphasen, einer weichen sowie einer harten, resultiert. Das erfindungsgemäße hydroxy-funktionale Comonomer kann dabei in einer oder in beiden Voremulsionen / Phasen enthalten sein, für maximale Wirkung in Bezug auf die Gefrier/Tau-Stabilität des Latexpolymeren sollte es jedoch vorzugsweise in der Weichphase einpolymerisiert werden.

Nach seiner Herstellung wird das Polymerlatex-Bindemittel vorzugsweise zur Verringerung des Restmonomerengehalts chemisch gestrippt. Das chemische Strippen erfolgt vorzugsweise durch kontinuierliche Zugabe eines Oxidationsmittels, wie eines Peroxids (z.B. t-Butylhydroperoxid) und eines Reduktionsmittels (z.B. Natriumacetonbisulfit), oder eines anderen Redoxpaars, wie z.B. denjenigen gemäß A.S. Sarac in Progress in Polymer Science 24(1999), 1149-1204, zu dem Latexbindemittel bei erhöhter Temperatur und über einen vorgegebenen Zeitraum (z.B. 0,5 Stunden). Dann kann man den pH-Wert des Latex einstellen und nach dem chemischen Strippen ein Biozid oder andere Additive zugeben. Gegebenenfalls kann der Latex zur weiteren Reduktion von flüchtigen organischen Verbindungen (VOC's) noch zusätzlich phsyikalisch gestrippt werden, wie beispielsweise in DE 19745580 oder in EP 897931 beschrieben.

Die das oben beschriebene Latexpolymer (a) enthaltende Polymerdispersion hat vorzugsweise einen Feststoffgehalt von etwa 30 bis etwa 75% und eine mittlere Latexteilchengröße von etwa 50 bis etwa 650 nm. Das Latexpolymer liegt in der wässrigen Beschichtungszusammensetzung vorzugsweise in einer Menge von etwa 5 bis etwa 60 Gewichtsprozent und besonders bevorzugt von etwa 8 bis etwa 40 Gewichtsprozent vor (d.h. der Gewichtsprozentanteil des trockenen Latexpolymers, bezogen auf das Gesamtgewicht der Beschichtungszusammensetzung).

Wie oben erwähnt, enthält die wässrige Beschichtungszusammensetzung mindestens ein Pigment. Im Rahmen der vorliegenden Erfindung umfasst der Begriff "Pigment" nicht filmbildende Feststoffe wie Pigmente, Streckmittel und Füllstoffe. Das mindestens eine Pigment wird vorzugsweise aus der Gruppe bestehend aus TiO₂ (sowohl in Anatas- als auch in Rutil-Form), Ton (Aluminiumsilicat), CaCO₃ (sowohl in zerkleinerter als auch in ausgefällter Form), Aluminiumoxid, Siliciumdioxid, Magnesiumoxid, Talk (Magnesiumsilicat), Baryten (Bariumsulfat), Zinkoxid, Zinksulfit, Natriumoxid, Kaliumoxid und Mischungen davon ausgewählt. Als Mischungen eignen sich u.a. Mischungen von Metalloxiden, wie die unter den Warenzeichen MINEX^{®} (Oxide von Silicium, Aluminium, Natrium und Kalium, im Handel erhältlich von Unimin Specialty Minerals), CELITES^{®} (Aluminiumoxid und Siliciumdioxid, im Handel erhältlich von Celite Company), ATOMI-TES^{®} (im Handel erhältlich von English China Clay International) und ATTAGELS^{®} (im Handel erhältlich von Engelhard) vertriebenen. Besonders bevorzugt umfasst das mindestens eine Pigment TiO₂, CaCO₃ oder Ton. Die mittlere Teilchengröße der Pigmente liegt im allgemeinen im Bereich von etwa 0,01 bis etwa 50 µm. So haben beispielsweise die in der wässrigen Beschichtungszusammensetzung verwendeten TiO₂-Teilchen in der Regel eine mittlere Teilchengröße von etwa 0,15 bis etwa 0,40 µm. Das Pigment kann der wässrigen Beschichtungszusammensetzung in Form eines Pulvers oder einer Aufschlämmung zugegeben werden. Das Pigment liegt in der wässrigen Beschichtungszusammensetzung vorzugsweise in einer Menge von etwa 5 bis etwa 50 Gewichtsprozent, besonders bevorzugt von etwa 10 bis etwa 40 Gewichtsprozent, vor.

Die Beschichtungszusammensetzung kann gegebenenfalls Additive enthalten, wie ein oder mehrere Filmbildungshilfsmittel oder Koaleszenzmittel. Als Filmbildungshilfsmittel oder Koaleszenzmittel eignen sich u.a. Weichmacher und Trocknungsverzögerer, wie hochsiedende polare Lösungsmittel. Erfindungsgemäß können auch andere herkömmliche Additive verwendet werden, wie beispielsweise Dispergiermittel, zusätzliche Tenside (d.h. Netzmittel), Rheologiemodifikatoren, Entschäumer, Verdicker, Biozide, Mittel gegen Mehltau, Farbmittel wie Farbpigmente und Farbstoffe, Wachse, Parfüms, Cosolventien und dergleichen. Beispielsweise kann man zur Herstellung des Polymerlatex nichtionische und/oder ionische (z.B. anionische oder kationische) Tenside verwenden. Diese Additive liegen in der wässrigen Beschichtungszusammensetzung in der Regel in einer Menge von 0 bis etwa 15 Gew.-%, besonders bevorzugt von etwa 1 bis etwa 10 Gew.-%, bezogen auf das Gesamtgewicht der Beschichtungszusammensetzung, vor.

Wie oben erwähnt, enthält die wässrige Beschichtungszusammensetzung weniger als 3,0 Gew.-% Frostschutzmittel, bezogen auf das Gesamtgewicht der wässrigen Beschichtungszusammensetzung. Beispiele für Frostschutzmittel sind Ethylenglykol, Diethylenglykol, Propylenglykol, Glycerin (1,2,3-Trihydroxypropan), Ethanol, Methanol, 1-Methoxy-2-propanol, 2-Amino-2-methyl-1-propanol und FTS-365 (ein Gefrier/Tau-Stabilisator von Inovachem Specialty Chemicals). Besonders bevorzugt enthält die wässrige Beschichtungszusammensetzung weniger als1,0 Gew.-% Frostschutzmittel oder ist weitgehend frei (d.h. enthält weniger als 0,1 Gew.-%) von Frostschutzmittel. Demgemäß hat die erfindungsgemäße wässrige Beschichtungszusammensetzung vorzugsweise einen VOC-Gehalt von weniger als etwa 100 g/L und besonders bevorzugt kleiner gleich etwa 50 g/L. Obwohl die erfindungsgemäßen wässrigen Beschichtungszusammensetzungen wenig oder gar kein Frostschutzmittel enthalten, besitzen die Zusammensetzungen Gefrier/Tau-Stabilitäten auf in der Technik wünschenswerten Niveaus. Beispielsweise können die erfindungsgemäßen wässrigen Beschichtungszusammensetzungen Gefrier/Tau-Zyklen gemäß ASTM-Methode D2243-82 unterworfen werden, ohne dass sie koagulieren. Die wässrigen Beschichtungszusammensetzungen können auch einen nach der nachstehend erörterten Methode durchgeführten Drawdown-Test bestehen. Darüber hinaus weisen die erfindungsgemäßen wässrigen Beschichtungszusammensetzungen eine gute Hitze-Lagerstabilität auf und zeigen nach 14 Tagen Lagerung bei 50°C nach der nachstehend erörterten Methode Zunahmen der Stormer-Viskosität von weniger als 10KU.

Bei dem Rest der erfindungsgemäßen wässrigen Beschichtungszusammensetzung handelt es sich um Wasser. Wenngleich ein großer Teil des Wassers in der Polymerlatex-Dispersion und in anderen Komponenten der wässrigen Beschichtungszusammensetzung vorliegt, wird die wässrige Beschichtungszusammensetzung im allgemeinen auch separat mit Wasser versetzt. Die wässrige Beschichtungszusammensetzung enthält in der Regel etwa 10 bis etwa 85 Gew.-% und besonders bevorzugt etwa 35 bis etwa 80 Gew.-% Wasser. Anders ausgedrückt beträgt der Gesamtfeststoffgehalt der wässrigen Beschichtungszusammensetzung in der Regel etwa 15 bis etwa 90 Gew.-%, besonders bevorzugt etwa 20 bis etwa 65 Gew.-%.

Die Beschichtungszusammensetzungen werden in der Regel so formuliert, dass die getrockneten Beschichtungen mindestens 10 Vol.-% trockene Polymerfeststoffe und zusätzlich 5 bis 90 Vol.-% nichtpolymere Feststoffe in Form von Pigmenten enthalten. Die getrockneten Beschichtungen können auch Additive, wie Weichmacher, Dispergiermittel, Tenside, Rheologiemodifikatoren, Entschäumer, Verdicker, Biozide, Mittel gegen Mehltau, Farbmittel, Wachse und dergleichen enthalten, die beim Trocknen der Beschichtungszusammensetzung nicht verdampfen.

Nach einer bevorzugten Ausführungsform der Erfindung handelt es sich bei der wässrigen Beschichtungszusammensetzung um eine Latexanstrichmittelzusammensetzung, die ein Latexpolymer (a), das sich von mindestens einem Acrylmonomer ausgewählt aus der Gruppe aus Acrylsäure, Arylsäureestern, Methacrylsäure und Methacrylsäureestern und mindestens einem polymerisierbaren hydroxy-funktionalen Comonomer C ableitet; mindestens ein Pigment und Wasser enthält.

Die vorliegende Erfindung umfasst ferner ein Verfahren zur Herstellung einer wässrigen Beschichtungszusammensetzung durch Zusammenmischen eines Latexpolymers (a)s, das sich von mindestens einem Monomer und mindestens einem polymerisierbaren hydroxy-funktionalen Monomer gemäß obiger Beschreibung ableitet, und mindestens eines Pigments. Vorzugsweise liegt das Latexpolymer (a) in Form einer Latexpolymer-Dispersion vor. Zur Bereitstellung der oben erörterten Additive in der wässrigen Beschichtungszusammensetzung können die Additive in beliebiger geeigneter Reihenfolge zu dem Latexpolymer, dem Pigment oder Kombinationen davon gegeben werden. Im Fall von Anstrichmittelformulierungen hat die wässrige Beschichtungszusammensetzung vorzugsweise einen pH-Wert von 7 bis 10.

Bei der wässrigen Beschichtungszusammensetzung handelt es sich um eine stabile Flüssigkeit, die auf verschiedenste Materialien, wie beispielsweise Papier, Holz, Beton, Metall, Glas, Keramik, Kunststoffe, Putz und Bedachungsgrundlagen, wie Asphaltbeschichtungen, Dachpappen, Polyurethanschaumstoff-Isolierung; oder auf vorher angestrichene, grundierte, vorgestrichene, verschlissene oder verwitterterte Substrate aufgetragen werden kann. Die erfindungsgemäße wässrige Beschichtungszusammensetzung kann nach verschiedenen an sich gut bekannten Techniken, wie beispielsweise Streichen, Pinseln, Rollen, luftunterstütztes Spritzen oder Airless-Spritzen, elektrostatisches Spritzen und dergleichen, auf die Materialien aufgetragen werden.

Die vorliegende Erfindung wird nun anhand der folgenden nichteinschränkenden Beispiele weiter erläutert.

### Beispiel 1 a

Beispiel 1a beschreibt die Synthese einer einstufigen, nBA-basierenden Polymerdispersion, welche 3 % (Gewichtsprozent bezogen auf Polymer-Trockenmasse) BLEMMER® GLM (Glycerin-Monomethacrylat der Firma Marubeni Speciality Chemicals, Düsseldorf) beinhaltet. BLEMMER® GLM besitzt die folgende Struktur:

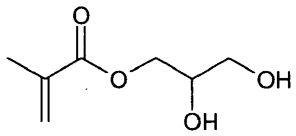

Man bereitet eine Monomer-Emulsion bestehend aus 248 Teilen Wasser, 42,9 Teilen Arylsulfonat (15%ige wässrige Lösung), 22,3 Teilen BLEMMER® GLM (92%ige wässrige Lösung), 5,2 Teilen Methacrylsäure, 276 Teilen Methylmethacrylat und 349 Teilen n-Butylacrylat. Zur Herstellung der Initiator-Lösung wurden 2,6 Teile Ammoniumpersulfat in 117 Teilen Wasser gelöst. Ein 1,5-Liter Glasreaktor wurde mit 236 Teilen Wasser befüllt, mit Stickstoff geflutet und auf 78°C geheizt. Nach Erreichen der Polymerisationstemperatur wurden 10 % der Initiator-Lösung sowie 1 % der Monomer-Emulsion hinzugefügt und 20 Minuten anpolymerisiert. Danach dosiert man gleichmäßig den Rest der Monomer-Emulsion innerhalb von 4 Stunden sowie den Rest der Initiator-Lösung innerhalb von 4,5 Stunden zu, polymerisiert 10 Minuten bei 78°C nach und lässt die Reaktionsmischung auf 65°C abkühlen.

Zur weiteren Abreicherung der Restmonomeren wurde eine chemische Desodorierung durchgeführt, indem man 2,6 Teile einer 10%igen tert-Butylhydroperoxid-Lösung sowie 4,6 Teile einer 5,7%igen Rongalit® C-Lösung (BASF) gleichzeitig über einen Zeitraum von 40 Minuten dem Reaktionsgemisch zuführt. Nach dem Abkühlen auf Raumtemperatur wurde mit konz. Ammoniak ein pH-Wert von ca. 8 eingestellt. Die resultierende Polymerdispersion hatte einen Feststoffgehalt von 50,9% sowie eine Teilchengröße von 238 nm.

### Beispiel 1 b

Beispiel 1 b beschreibt die Synthese einer einstufigen, nBA-basierenden Polymerdispersion, welche 5 % (Gewichtsprozent bezogen auf Polymer-Trockenmasse) BLEMMER® GLM beinhaltet.

Man bereitet eine Monomer-Emulsion bestehend aus 248 Teilen Wasser, 42,9 Teilen Arylsulfonat (15%ige wässrige Lösung), 35,5 Teilen BLEMMER® GLM (92%ige wässrige Lösung), 5,2 Teilen Methacrylsäure, 276 Teilen Methylmethacrylat und 336 Teilen n-Butylacrylat. Zur Herstellung der Initiator-Lösung wurden 2,6 Teile Ammoniumpersulfat in 117 Teilen Wasser gelöst. Ein 1,5-Liter Glasreaktor wurde mit 236 Teilen Wasser befüllt, mit Stickstoff geflutet und auf 78°C geheizt. Nach Erreichen der Polymerisationstemperatur wurden 10 % der Initiator-Lösung sowie 1 % der Monomer-Emulsion hinzugefügt und 20 Minuten anpolymerisiert. Danach dosiert man gleichmäßig den Rest der Monomer-Emulsion innerhalb von 4 Stunden sowie den Rest der Initiator-Lösung innerhalb von 4,5 Stunden zu, polymerisiert 10 Minuten bei 78°C nach und lässt die Reaktionsmischung auf 65°C abkühlen.

Zur weiteren Abreicherung der Restmonomeren wurde eine chemische Desodorierung durchgeführt, indem man 2,6 Teile einer 10%igen tert-Butylhydroperoxid-Lösung sowie 4,6 Teile einer 5,7%igen Rongalit® C-Lösung (BASF) gleichzeitig über einen Zeitraum von 40 Minuten dem Reaktionsgemisch zuführt. Nach dem Abkühlen auf Raumtemperatur wurde mit konz. Ammoniak ein pH-Wert von ca. 8 eingestellt. Die resultierende Polymerdispersion hatte einen Feststoffgehalt von 51% sowie eine Teilchengröße von 279 nm.

### Beispiel 1 c

Beispiel 1c beschreibt die Synthese einer einstufigen, nBA-basierenden Polymerdispersion, welche 3 % (Gewichtsprozent bezogen auf Polymer-Trockenmasse) Glycerin-Monoacrylat (Laborprodukt der Firma BASF AG) beinhaltet. Glycerin-Monoacrylat besitzt die folgende Struktur:

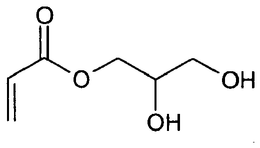

Man bereitet eine Monomer-Emulsion bestehend aus 231 Teilen Wasser, 42,9 Teilen Arylsulfonat (15%ige wässrige Lösung), 39,0 Teilen Glycerin-Monoacrylat (50%ige wässrige Lösung), 5,2 Teilen Methacrylsäure, 276 Teilen Methylmethacrylat und 349 Teilen n-Butylacrylat. Zur Herstellung der Initiator-Lösung wurden 2,6 Teile Ammoniumpersulfat in 117 Teilen Wasser gelöst. Ein 1,5-Liter Glasreaktor wurde mit 236 Teilen Wasser befüllt, mit Stickstoff geflutet und auf 78°C geheizt. Nach Erreichen der Polymerisationstemperatur wurden 10 % der Initiator-Lösung sowie 1 % der Monomer-Emulsion hinzugefügt und 20 Minuten anpolymerisiert. Danach dosiert man gleichmäßig den Rest der Monomer-Emulsion innerhalb von 4 Stunden sowie den Rest der Initiator-Lösung innerhalb von 4,5 Stunden zu, polymerisiert 10 Minuten bei 78°C nach und lässt die Reaktionsmischung auf 65°C abkühlen.

Zur weiteren Abreicherung der Restmonomeren wurde eine chemische Desodorierung durchgeführt, indem man 2,6 Teile einer 10%igen tert-Butylhydroperoxid-Lösung sowie 4,6 Teile einer 5,7%igen Rongalit® C-Lösung (BASF) gleichzeitig über einen Zeitraum von 40 Minuten dem Reaktionsgemisch zuführt. Nach dem Abkühlen auf Raumtemperatur wurde mit konz. Ammoniak ein pH-Wert von ca. 8 eingestellt. Die resultierende Polymerdispersion hatte einen Feststoffgehalt von 51 % sowie eine Teilchengröße von 240 nm.

### Beispiel 1d (Vergleich)

Beispiel 1d beschreibt die Synthese einer einstufigen, nBA-basierenden Polymerdispersion, welche 3 % (Gewichtsprozent bezogen auf Polymer-Trockenmasse) HEMA (Hydroxyethyl-Methacrylat der Firma Lonza AG) beinhaltet. HEMA besitzt die folgende Struktur:

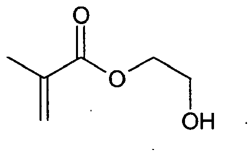

Man bereitet eine Monomer-Emulsion bestehend aus 250 Teilen Wasser, 42,9 Teilen Arylsulfonat (15%ige wässrige Lösung), 32,5 Teilen HEMA, 5,2 Teilen Methacrylsäure, 276 Teilen Methylmethacrylat und 336 Teilen n-Butylacrylat. Zur Herstellung der Initiator-Lösung wurden 2,6 Teile Ammoniumpersulfat in 117 Teilen Wasser gelöst. Ein 1,5-Liter Glasreaktor wurde mit 236 Teilen Wasser befüllt, mit Stickstoff geflutet und auf 78°C geheizt. Nach Erreichen der Polymerisationstemperatur wurden 10 % der Initiator-Lösung sowie 1 % der Monomer-Emulsion hinzugefügt und 20 Minuten anpolymerisiert. Danach dosiert man gleichmäßig den Rest der Monomer-Emulsion innerhalb von 4 Stunden sowie den Rest der Initiator-Lösung innerhalb von 4,5 Stunden zu, polymerisiert 10 Minuten bei 78°C nach und lässt die Reaktionsmischung auf 65°C abkühlen.

Zur weiteren Abreicherung der Restmonomeren wurde eine chemische Desodorierung durchgeführt, indem man 2,6 Teile einer 10%igen tert-Butylhydroperoxid-Lösung sowie 4,6 Teile einer 5,7%igen Rongalit® C-Lösung (BASF) gleichzeitig über einen Zeitraum von 40 Minuten dem Reaktionsgemisch zuführt. Nach dem Abkühlen auf Raumtemperatur wurde mit konz. Ammoniak ein pH-Wert von ca. 8 eingestellt. Die resultierende Polymerdispersion hatte einen Feststoffgehalt von 50,5% sowie eine Teilchengröße von 314 nm.

### Beispiel 2a

Beispiel 2a beschreibt die Synthese einer einstufigen, EHA-basierenden Polymerdispersion, welche 3 % (Gewichtsprozent bezogen auf Polymer-Trockenmasse) BLEMMER® GLM beinhaltet.

Man bereitet eine Monomer-Emulsion bestehend aus 229 Teilen Wasser, 39,6 Teilen Arylsulfonat (15%ige wässrige Lösung), 19,7 Teilen BLEMMER® GLM (92%ige wässrige Lösung), 4,8 Teilen Methacrylsäure, 282 Teilen Methylmethacrylat und 295 Teilen 2-Ethylhexylacrylat. Zur Herstellung der Initiator-Lösung wurden 2,4 Teile Ammoniumpersulfat in 108 Teilen Wasser gelöst. Ein 1,5-Liter Glasreaktor wurde mit 217 Teilen Wasser befüllt, mit Stickstoff geflutet und auf 78°C geheizt. Nach Erreichen der Polymerisationstemperatur wurden 10 % der Initiator-Lösung sowie 1 % der Monomer-Emulsion hinzugefügt und 20 Minuten anpolymerisiert. Danach dosiert man gleichmäßig den Rest der Monomer-Emulsion innerhalb von 4 Stunden sowie den Rest der Initiator-Lösung innerhalb von 4,5 Stunden zu, polymerisiert 10 Minuten bei 78°C nach und lässt die Reaktionsmischung auf 65°C abkühlen.

Zur weiteren Abreicherung der Restmonomeren wurde eine chemische Desodorierung durchgeführt, indem man 2,4 Teile einer 10%igen tert-Butylhydroperoxid-Lösung sowie 4,2 Teile einer 5,7%igen Rongalit® C-Lösung (BASF) gleichzeitig über einen Zeitraum von 40 Minuten dem Reaktionsgemisch zuführt. Nach dem Abkühlen auf Raumtemperatur wurde mit konz. Ammoniak ein pH-Wert von ca. 8 eingestellt. Die resultierende Polymerdispersion hatte einen Feststoffgehalt von 50,7% sowie eine Teilchengröße von 294 nm.

### Beispiel 2b

Beispiel 2b beschreibt die Synthese einer einstufigen, EHA-basierenden Polymerdispersion, welche 5 % (Gewichtsprozent bezogen auf Polymer-Trockenmasse) BLEMMER® GLM beinhaltet.

Man bereitet eine Monomer-Emulsion bestehend aus 229 Teilen Wasser, 39,6 Teilen Arylsulfonat (15%ige wässrige Lösung); 32,8 Teilen BLEMMER® GLM (92%ige wässrige Lösung), 4,8 Teilen Methacrylsäure, 282 Teilen Methylmethacrylat und 283 Teilen 2-Ethylhexylacrylat. Zur Herstellung der Initiator-Lösung wurden 2,4 Teile Ammoniumpersulfat in 108 Teilen Wasser gelöst. Ein 1,5-Liter Glasreaktor wurde mit 217 Teilen Wasser befüllt, mit Stickstoff geflutet und auf 78°C geheizt. Nach Erreichen der Polymerisationstemperatur wurden 10 % der Initiator-Lösung sowie 1 % der Monomer-Emulsion hinzugefügt und 20 Minuten anpolymerisiert. Danach dosiert man gleichmäßig den Rest der Monomer-Emulsion innerhalb von 4 Stunden sowie den Rest der Initiator-Lösung innerhalb von 4,5 Stunden zu, polymerisiert 10 Minuten bei 78°C nach und lässt die Reaktionsmischung auf 65°C abkühlen.

Zur weiteren Abreicherung der Restmonomeren wurde eine chemische Desodorierung durchgeführt, indem man 2,4 Teile einer 10%igen tert-Butylhydroperoxid-Lösung sowie 4,2 Teile einer 5,7%igen Rongalit® C-Lösung (BASF) gleichzeitig über einen Zeitraum von 40 Minuten dem Reaktionsgemisch zuführt. Nach dem Abkühlen auf Raumtemperatur wurde mit konz. Ammoniak ein pH-Wert von ca. 8 eingestellt. Die resultierende Polymerdispersion hatte einen Feststoffgehalt von 51 % sowie eine Teilchengröße von 229 nm.

### Beispiel 2c

Beispiel 2c beschreibt die Synthese einer einstufigen, EHA-basierenden Polymerdispersion, welche 3 % Glycerin-Monoacrylat (Gewichtsprozent bezogen auf Polymer-Trockenmasse) BLEMMER® GLM beinhaltet.

Man bereitet eine Monomer-Emulsion bestehend aus 213 Teilen Wasser, 39,6 Teilen Arylsulfonat (15%ige wässrige Lösung), 36,0 Teilen Glycerin-Monoacrylat (50%ige wässrige Lösung), 4,8 Teilen Methacrylsäure, 282 Teilen Methylmethacrylat und 295 Teilen 2-Ethylhexylacrylat. Zur Herstellung der Initiator-Lösung wurden 2,4 Teile Ammoniumpersulfat in 108 Teilen Wasser gelöst. Ein 1,5-Liter Glasreaktor wurde mit 217 Teilen Wasser befüllt, mit Stickstoff geflutet und auf 78°C geheizt. Nach Erreichen der Polymerisationstemperatur wurden 10 % der Initiator-Lösung sowie 1 % der Monomer-Emulsion hinzugefügt und 20 Minuten anpolymerisiert. Danach dosiert man gleichmäßig den Rest der Monomer-Emulsion innerhalb von 4 Stunden sowie den Rest der Initiator-Lösung innerhalb von 4,5 Stunden zu, polymerisiert 10 Minuten bei 78°C nach und lässt die Reaktionsmischung auf 65°C abkühlen.

Zur weiteren Abreicherung der Restmonomeren wurde eine chemische Desodorierung durchgeführt, indem man 2,4 Teile einer 10%igen tert-Butylhydroperoxid-Lösung sowie 4,2 Teile einer 5,7%igen Rongalit® C-Lösung (BASF) gleichzeitig über einen Zeitraum von 40 Minuten dem Reaktionsgemisch zuführt. Nach dem Abkühlen auf Raumtemperatur wurde mit konz. Ammoniak ein pH-Wert von ca. 8 eingestellt. Die resultierende Polymerdispersion hatte einen Feststoffgehalt von 50,7% sowie eine Teilchengröße von 275 nm.

### Beispiel 3

Beispiel 3 beschreibt die Synthese einer zweistufigen Polymerdispersion, welche 3 % (Gewichtsprozent bezogen auf Polymer-Trockenmasse) BLEMMER® GLM enthält.

Man bereitet eine erste Monomer-Emulsion bestehend aus 187 Teilen Wasser, 24,0 Teilen Disponil FES 77 (30%ige wässrige Lösung eines sulfatierten Fettsäureethoxylats, der Firma Cognis Deutschland), 32,0 Teilen Steinapol NLS (15%ige wässrige Lösung von Natriumlaurylsulfat), 19,7 Teilen BLEMMER® GLM (92%ige wässrige Lösung), 6,0 Teilen Acrylsäure, 3,0 Teilen Itakonsäure, 45 Teilen Mhoromer 6844-0 [N-(-2-Methacryloyloxy-ethyl)ethylenharnstoff, 25 % in MMA der Firma Röhm, Darmstadt, Deutschland], 141 Teilen Methylmethacrylat und 315 Teilen n-Butylacrylat. Zudem bereitet man eine zweite Monomer-Emulsion bestehend aus 43 Teilen Wasser, 6,0 Teilen Disponil FES 77 (30%ige wässrige Lösung eines sulfatierten Fettsäureethoxylats, der Firma Cognis Deutschland), 8,0 Teilen Steinapol NLS (15%ige wässrige Lösung von Natriumlaurylsulfat) und 72 Teilen Methylmethacrylat. Zur Herstellung der Initiator-Lösung wurden 1,2 Teile Ammoniumpersulfat in 23 Teilen Wasser gelöst. Ein 1,5-Liter Glasreaktor wurde mit 240 Teilen Wasser sowie 29,1 g eines Polystyrol-Saatlatex (33%ig, ca. 25 nm) befüllt, mit Stickstoff geflutet und auf 85°C geheizt. Nach Erreichen der Polymerisationstemperatur wurden 5 % der Initiator-Lösung hinzugefügt und 5 Minuten anpolymerisiert. Danach dosiert man gleichmäßig die erste Monomer-Emulsion innerhalb von 150 Minuten sowie den Rest der Initiator-Lösung innerhalb von 180 Minuten, sofort nach Zulaufende der ersten Monomer-Emulsion wird die zweite über einen Zeitraum von 30 Minuten zudosiert und anschließend 30 Minuten bei 85°C nachpolymerisiert.

Zur weiteren Abreicherung der Restmonomeren wurde eine chemische Desodorierung durchgeführt, indem man 6,0 Teile einer 10%igen tert-Butylhydroperoxid-Lösung sowie 6,4 Teile einer 16,5%igen Acetonbisulfit-Lösung gleichzeitig über einen Zeitraum von 60 Minuten dem Reaktionsgemisch zuführt. Nach dem Abkühlen auf Raumtemperatur wurde mit konz. Ammoniak ein pH-Wert von ca. 8 eingestellt. Die resultierende Polymerdispersion hatte einen Feststoffgehalt von 50,5% sowie eine Teilchengröße von 132 nm.

### Vergleichsbeispiel 1

Vergleichsbeispiel 1 beschreibt die Synthese einer einstufigen, nBA-basierenden Polymerdispersion ohne hydroxy-funktionelle Co-Monomere.

Man bereitet eine Monomer-Emulsion bestehend aus 248 Teilen Wasser; 42,9 Teilen Arylsulfonat (15%ige wässrige Lösung), 5,2 Teilen Methacrylsäure, 276 Teilen Methylmethacrylat und 369 Teilen n-Butylacrylat. Zur Herstellung der Initiator-Lösung wurden 2,6 Teile Ammoniumpersulfat in 117 Teilen Wasser gelöst. Ein 1,5-Liter Glasreaktor wurde mit 236 Teilen Wasser befüllt, mit Stickstoff geflutet und auf 78°C geheizt. Nach Erreichen der Polymerisationstemperatur wurden 10 % der Initiator-Lösung sowie 1 % der Monomer-Emulsion hinzugefügt und 20 Minuten anpolymerisiert. Danach dosiert man gleichmäßig den Rest der Monomer-Emulsion innerhalb von 4 Stunden sowie den Rest der Initiator-Lösung innerhalb von 4,5 Stunden zu, polymerisiert 10 Minuten bei 78°C nach und lässt die Reaktionsmischung auf 65°C abkühlen.

Zur weiteren Abreicherung der Restmonomeren wurde eine chemische Desodorierung durchgeführt, indem man 2,6 Teile einer 10%igen tert-Butylhydroperoxid-Lösung sowie 4,6 Teile einer 5,7%igen Rongalit® C-Lösung (BASF) gleichzeitig über einen Zeitraum von 40 Minuten dem Reaktionsgemisch zuführt. Nach dem Abkühlen auf Raumtemperatur wurde mit konz. Ammoniak ein pH-Wert von ca. 8 eingestellt. Die resultierende Polymerdispersion hatte einen Feststoffgehalt von 50,8% sowie eine Teilchengröße von 251 nm.

### Vergleichsbeispiel 2

Vergleichsbeispiel 2 beschreibt die Synthese einer einstufigen, EHA-basierenden Polymerdispersion ohne hydroxy-funktionelle Co-Monomere.

Man bereitet eine Monomer-Emulsion bestehend aus 229 Teilen Wasser, 39,6 Teilen Arylsulfonat (15%ige wässrige Lösung), 4,8 Teilen Methacrylsäure, 282 Teilen Methylmethacrylat und 315 Teilen 2-Ethylhexylacrylat. Zur Herstellung der Initiator-Lösung wurden 2,4 Teile Ammoniumpersulfat in 108 Teilen Wasser gelöst. Ein 1,5-Liter Glasreaktor wurde mit 217 Teilen Wasser befüllt, mit Stickstoff geflutet und auf 78°C geheizt. Nach Erreichen der Polymerisationstemperatur wurden 10 % der Initiator-Lösung sowie 1 % der Monomer-Emulsion hinzugefügt und 20 Minuten anpolymerisiert. Danach dosiert man gleichmäßig den Rest der Monomer-Emulsion innerhalb von 4 Stunden sowie den Rest der Initiator-Lösung innerhalb von 4,5 Stunden zu, polymerisiert 10 Minuten bei 78°C nach und lässt die Reaktionsmischung auf 65°C abkühlen.

Zur weiteren Abreicherung der Restmonomeren wurde eine chemische Desodorierung durchgeführt, indem man 2,4 Teile einer 10%igen tert-Butylhydroperoxid-Lösung sowie 4,2 Teile einer 5,7%igen Rongalit® C-Lösung (BASF) gleichzeitig über einen Zeitraum von 40 Minuten dem Reaktionsgemisch zuführt. Nach dem Abkühlen auf Raumtemperatur wurde mit konz. Ammoniak ein pH-Wert von ca. 8 eingestellt. Die resultierende Polymerdispersion hatte einen Feststoffgehalt von 50,8% sowie eine Teilchengröße von 300 nm.

### Vergleichsbeispiel 3

Vergleichsbeispiel 3 beschreibt die Synthese einer zweistufigen Polymerdispersion ohne hydroxy-funktionelle Co-Monomere.

Man bereitet eine erste Monomer-Emulsion bestehend aus 189 Teilen Wasser, 24,0 Teilen Disponil FES 77 (30%ige wässrige Lösung eines sulfatierten Fettsäureethoxylats, der Firma Cognis Deutschland), 32,0 Teilen Steinapol NLS (15%ige wässrige Lösung von Natriumlaurylsulfat), 6,0 Teilen Acrylsäure, 3,0 Teilen Itakonsäure, 45 Teilen Mhoromer 6844-0 [N-(-2-Methacryloyloxy-ethyl)ethylenharnstoff, 25 % in MMA der Firma Röhm, Darmstadt, Deutschland], 141 Teilen Methylmethacrylat und 333 Teilen n-Butylacrylat. Zudem bereitet man eine zweite Monomer-Emulsion bestehend aus 43 Teilen Wasser, 6,0 Teilen Disponil FES 77 (30%ige wässrige Lösung eines sulfatierten Fettsäureethoxylats, der Firma Cognis Deutschland), 8,0 Teilen Steinapol NLS (15%ige wässrige Lösung von Natriumlaurylsulfat) und 72 Teilen Methylmethacrylat. Zur Herstellung der Initiator-Lösung wurden 1,2 Teile Ammoniumpersulfat in 23 Teilen Wasser gelöst. Ein 1,5-Liter Glasreaktor wurde mit 240 Teilen Wasser sowie 29,1 g eines Polystyrol-Saatlatex (33%ig, ca. 25 nm) befüllt, mit Stickstoff geflutet und auf 85°C geheizt. Nach Erreichen der Polymerisationstemperatur wurden 5 % der Initiator-Lösung hinzugefügt und 5 Minuten anpolymerisiert. Danach dosiert man gleichmäßig die erste Monomer-Emulsion innerhalb von 150 Minuten sowie den Rest der Initiator-Lösung innerhalb von 180 Minuten, sofort nach Zulaufende der ersten Monomer-Emulsion wird die zweite über einen Zeitraum von 30 Minuten zudosiert und anschließend 30 Minuten bei 85°C nachpolymerisiert.

Zur weiteren Abreicherung der Restmonomeren wurde eine chemische Desodorierung durchgeführt, indem man 6,0 Teile einer 10%igen tert-Butylhydroperoxid-Lösung sowie 6,4 Teile einer 16,5%igen Acetonbisulfit-Lösung gleichzeitig über einen Zeitraum von 60 Minuten dem Reaktionsgemisch zuführt. Nach dem Abkühlen auf Raumtemperatur wurde mit konz. Ammoniak ein pH-Wert von ca. 8 eingestellt. Die resultierende Polymerdispersion hatte einen Feststoffgehalt von 50,6% sowie eine Teilchengröße von 135 nm.

### Farbformulierung

Die folgende Farbformulierung mit einem VOC-Gehalt von 0 g/L wurde zur Evaluierung der Eigenschaften der Beispiele 1-3 sowie der Vergleichsbeispiele 1-3 benutzt:

| Inhaltsstoff | Gewichtsteile |
|---|---|
| Wasser | 66,5 |
| Natrosol® 250 HR¹⁾ | 1.1 |
| Kaliumpyrophosphat TKPP²⁾ | 1.0 |
| Proxel® BD 20 | 1.6 |
| Tamol® 731³⁾ | 3.8 |
| Drewplus® L 475⁴⁾ | 2.2 |
| Minex® 4 | 86.7 |
| Omyacarb® 10⁵⁾ | 30.7 |
| Ti-Pure® R 941⁶⁾ | 206.7 |
| Diafil® 525⁷⁾ | 8.7 |
| Dispersion (49,9% - 51,2%) | 246,6 - 240,3 |
| Acrysol® RM 2020⁸⁾ | 11.0 |
| Drewplus® L 475 | 1.1 |
| Nuocide® N 40-D [404-D]⁹⁾ | 3.8 |
| Nopco® DSX 1550¹⁰⁾ | 1.1 |
| Wasser | 27,6 - 33,8 |

| | |
|---|---|
| Die Inhaltsstoffe wurden unter Rühren in der oben angegebenen Reihenfolge zugegeben. ¹⁾ Hydroxyethylzellulose-Verdicker der Firma Hercules Inc. ²⁾ BK Ladenburg, Ladenburg, Deutschland ³⁾ Natriumsalz eines carboxylierten Polyelektrolyten, 25%ige wässrige Lösung, Pigmentverteiler der Firma Rohm & Haas Co. Philadelphia, Pa, USA ⁴⁾ Entschäumer der Firma Ashland Chemical Co., Drew Industrial Division, Boonton, NJ, USA ⁵⁾ Calciumcarbonat-Füllstoff, Teilchengröße ca. 12 µm, Omya AG, Oftringen, Schweiz ⁶⁾ Titaniumdioxid-Paste, 64.5 % Feststoffgehalt, DuPont, Wilmington, De, USA ⁷⁾ mineralischer Füllstoff der Firma CR Minerals Co., Golden, Co, USA ⁸⁾ Polyurethan-Verdicker, 20 % Feststoffgehalt, Rohm & Haas Co. Philadelphia, Pa, USA ⁹⁾ Biozid der Firma Creanova, Piscataway, NJ, USA ¹⁰⁾ Nonionischer Rheology-Modifizierer der Firma Cognis GmbH, Düsseldorf, Deutschland | |

### Testmethoden

Stormer-Viskosität (in KU, Krebs Units): Stormer-Viskositäten wurden gemäß ASTM D 562-81 gemessen.

ICI-Viskosität (in Poise): ICI-Viskositäten wurden bei hohen Scherraten gemäß ASTM D 4287-94 gemessen.

Heiß-Lagerstabilität: Die Heiß-Lagerstabilität der Farben wurde durch Messung des Anstiegs in der Stormer-Viskosität (ΔKU) nach 14-tägiger Lagerung in einem Trockenschrank bei 50°C bestimmt.

Gefrier/Tau-Stabilität: Die Gefrier/Tau-Stabilität der Farben wurde gemäß ASTM D 2243-82 bei einer Gefrierschrank-Temperatur von -18°C bestimmt. Sofern es zu keiner Koagulation kam wurde nach jedem Gefrier/Tau-Zyklus die Stormer-Viskosität der Probe gemessen.

### Testergebnisse der Farben

Die Testergebnisse der Farben, welche aus den Bindemitteln aus den Beispielen 1-3 sowie den Vergleichsbeispielen 1-3 formuliert wurden, finden sich im Folgenden in Tabelle 1.

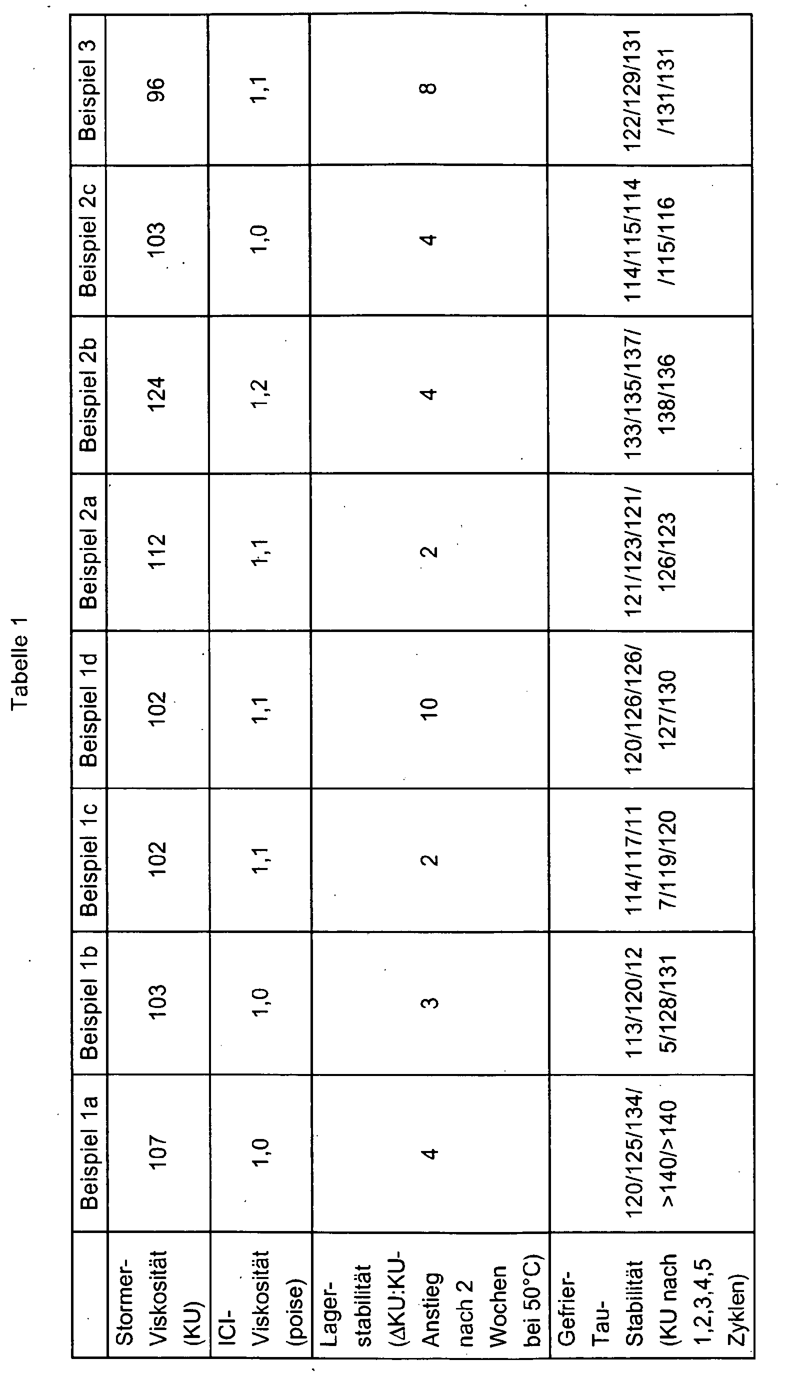

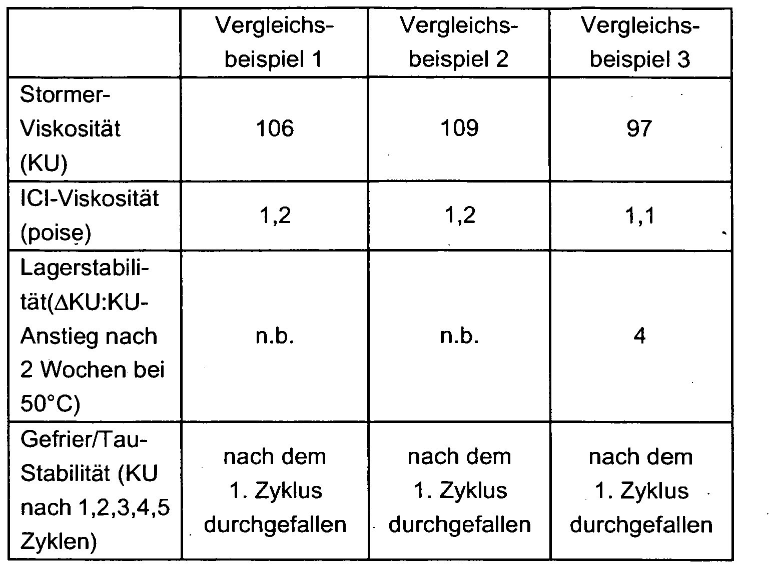

Die in Tabelle 1 gezeigten Ergebnisse belegen, dass sich durch Einsatz der erfindungsgemäßen, hydroxy-funktionalen Co-Monomere die Gefrier/Tau-Stabilität der untersuchten Farben selbst bei Lösungsmittel-freier Formulierung bei 0 g/l VOC sicher stellen lässt, während die Vergleichsversuche den Test nicht bestehen. Demzufolge kann die Menge an Frostschutzmittel, welche normalerweise bei der Herstellung dieser Farben verwendet wird, ohne Stabilitätseinbußen reduziert werden. In anderen Worten, die erfindungsgemäßen, hydroxy-funktionalen Co-Monomere erlauben die Formulierung von Lösungsmittel-armen (low VOC) oder Lösungsmittel-freien (zero VOC) und damit umweltfreundlichen Dispersionsfarben.

## Patentansprüche

1. Beschichtungsmassen enthaltend
(a) ein Bindemittel aus Acrylat-Basis enthaltend 1 bis 10 Gew.-% mindestens eines hydroxy-funktionalen Comonomers der allgemeinen Formel (I)
A-[B]ₙ-C
wobei
A eine polymerisierbare Gruppe bedeutet,
B einen Spacer und
C einen hydroxy-funktionalen Rest bedeutet und
n die Zahl 0 oder 1 bedeutet
(b) mindestens ein Pigment
(c) Wasser
(d) weniger als 3 Gew.-% Frostschutzmittel sowie
(e) gegebenenfalls weitere übliche Hilfsmittel ,
**dadurch gekennzeichnet, dass** die hydroxy funktionalen Comonomere (a) ausgewählt sind aus der Gruppe Glycerin-monomethacrylat (Blemmer^{®} GLM) und Glycerin-monoacrylat.

2. Wässrige Beschichtungsmasse gemäß Anspruch 1, **dadurch gekennzeichnet, dass** sie weniger als 1 Gew.-%, bezogen auf das Gesamtgewicht der wässrigen Beschichtungsmasse an Frostschutzmittel enthält.

3. Wässrige Beschichtungsmasse gemäß Anspruch 1 oder 2, **dadurch gekennzeichnet, dass** die hydroxy funktionalen Comonomere (a) ausgewählt sind aus der Gruppe Hydroxyethyl-(meth)acrylat, Glycerin-(meth)allylether, Glycerin-mono(meth)acrylat, Sorbitol-mono(meth)acrylat, Trimethylolpropanmonoallylether, Trimethylolpropan-mono(meth)acrylat Pentaerythritol-mono(meth)acrylat, 2-Methacryloxyethyl-glucopyranosid, Allyl-glucopyranosid oder Acyloyl-galactopyranosid.

4. Verwendung der wässrigen Beschichtungsmasse gemäß einem der Ansprüche 1 bis 3 als Latexanstrichmittel.

5. Latexanstrichmittel enthaltend
(a) ein Bindemittel auf Acrylat-Basis enthaltend 1 bis 10 Gew.-% mindestens eines hydroxy-funktionalen Comonomers der allgemeinen Formel (I)
A-[B]ₙ-C
wobei
A eine polymerisierbare Gruppe bedeutet,
B einen Spacer und
C einen hydroxy-funktionalen Rest bedeutet und
n die Zahl 0 oder 1 bedeutet
(b) mindestens ein Pigment
(c) Wasser
(d) weniger als 3 Gew.-% Frostschutzmittel sowie gegebenenfalls weitere übliche Hilfsmittel, **dadurch gekennzeichnet, dass** die hydroxy- funktionalen Comonomere (a) ausgewählt sind aus der Gruppe Glycerin-monomethacrylat (Blemmer^{®} GLM) und Glycerin-monoacrylat.

6. Verwendung der Comonomere der allgemeinen Formel (I) gemäß Anspruch 1 zur Verbesserung der Gefrier-Tau-Stabilität und der Hitze-Lagerstabilität von wässrigen Beschichtungsmassen.

## Claims

1. A coating material comprising
(a) an acrylate-based binder comprising 1 % to 10% by weight of at least one hydroxy-functional comonomer of the general formula (I)
A-[B]ₙ-C
where
A is a polymerizable group,
B is a spacer,
C is a hydroxy-functional radical, and
n is 0 or 1,
(b) at least one pigment,
(c) water,
(d) less than 3% by weight of antifrost agent, and
(e) if appropriate, further, customary auxiliaries,
wherein the hydroxy-functional comonomers (a) are selected from the group consisting of glycerol monomethacrylate (Blemmer^{®} GLM) and glycerol monoacrylate.

2. The aqueous coating material according to claim 1, comprising less than 1 % by weight, based on the total weight of the aqueous coating material, of antifrost agent.

3. The aqueous coating material according to claim 1 or 2, wherein the hydroxy-functional comonomers (a) are selected from the group consisting of hydroxyethyl (meth)acrylate, glycerol (meth)allyl ether, glycerol mono(meth)acrylate, sorbitol mono(meth)acrylate, trimethylolpropane monoallyl ether, trimethylolpropane mono(meth)acrylate, pentaerythritol mono(meth)acrylate, 2-methacryloyloxyethylglucopyranoside, allyl-glucopyranoside, and acyloylgalactopyranoside.

4. The use of the aqueous coating material according to any one of claims 1 to 3 as a latex paint.

5. A latex paint comprising
(a) an acrylate-based binder comprising 1 % to 10% by weight of at least one hydroxy-functional comonomer of the general formula (I)
A-[B]ₙ-C
where
A is a polymerizable group,
B is a spacer,
C is a hydroxy-functional radical, and
n is 0 or 1,
(b) at least one pigment,
(c) water,
(d) less than 3% by weight of antifrost agent, and if appropriate, further, customary auxiliaries, wherein the hydroxy-functional comonomers (a) are selected from the group consisting of glycerol monomethacrylate (Blemmer^{®} GLM) and glycerol monoacrylate.

6. The use of the comonomer of the general formula (I) according to claim 1 to improve the freeze-thaw stability and the heat storage stability of an aqueous coating material.

## Revendications

1. Masses de revêtement, contenant
(a) un liant à base d'acrylate contenant 1 à 10% en poids d'au moins un comonomère à fonctionnalité hydroxy de formule générale (I)
A-[B]ₙ-C
où
A signifie un groupe polymérisable,
B signifie un écarteur et
C signifie un radical à fonctionnalité hydroxy et
n vaut le nombre 0 ou 1,
(b) au moins un pigment
(c) de l'eau
(d) moins de 3% en poids d'antigel, ainsi que
(e) le cas échéant d'autres adjuvants usuels,
**caractérisées en ce que** les comonomères à fonctionnalité hydroxy (a) sont choisis dans le groupe formé par le monométhacrylate de glycérol (Blemmer® GLM) et le monoacrylate de glycérol.

2. Masse aqueuse de revêtement selon la revendication 1, **caractérisée en ce qu'**elle contient moins de 1% en poids, par rapport au poids total de la masse aqueuse de revêtement comme agent antigel.

3. Masse aqueuse de revêtement selon la revendication 1 ou 2, **caractérisée en ce que** les comonomères à fonctionnalité hydroxy (a) sont choisis dans le groupe formé par le (méth)acrylate d'hydroxyéthyle, le glycérol-(méth)allyléther, le mono(méth)acrylate de glycérol, le mono(méth)acrylate de sorbitol, le triméthylolpropanemonoallyléther, le mono(méth)acrylate de triméthylolpropane, le mono(méth)acrylate de pentaérythritol, le 2-méthacryloxyéthylglucopyrannoside, l'allylglucopyrannoside ou l'acyloylgalactopyrannoside.

4. Utilisation de la masse aqueuse de revêtement selon l'une quelconque des revendications 1 à 3 comme peinture au latex.

5. Peinture au latex contenant
(a) un liant à base d'acrylate contenant 1 à 10% en poids d'au moins un comonomère à fonctionnalité hydroxy de formule générale (I)
A-[B]ₙ-C
où
A signifie un groupe polymérisable,
B signifie un écarteur et
C signifie un radical à fonctionnalité hydroxy et
n vaut le nombre 0 ou 1,
(b) au moins un pigment
(c) de l'eau
(d) moins de 3% en poids d'antigel, ainsi que le cas échéant d'autres adjuvants usuels, **caractérisée en ce que** les comonomères à fonctionnalité hydroxy (a) sont choisis dans le groupe formé par le monométhacrylate de glycérol (Blemmer® GLM) et le monoacrylate de glycérol.

6. Utilisation des comonomères de formule générale (I) selon la revendication 1 pour améliorer la stabilisation à la congélation-décongélation et la stabilité à l'entreposage à la chaleur de masses aqueuses de revêtement.
